# EUROPEAN PATENT APPLICATION

(11) **EP 4 307 500 A1**
(43) Date of publication of application: **17.01.2024**
(21) Application number: 22184901.1
(22) Date of filing: 14.07.2022
(51) Int. Cl.: H02B 11/10, H02B 11/127

(54) **ELECTRICAL CONNECTION DEVICE, CONTROL UNIT, SWITCHGEAR MODULE AND USE OF A DC MOTOR IN ALL ELECTRICAL CONNECTION DEVICE**

(71) Applicant: ABB SCHWEIZ AG, 5400 Baden (CH)
(72) Inventor: BREISCH, Sebastian, 69239 Neckarsteinach (DE); KRAFT, Klaus, 69123 Heidelberg (DE); KESBERGER, Markus, 67063 Ludwigshafen (DE); PENNER, Simon, 69469 Weinheim (DE); STAHL, Thomas, 74937 Spechbach (DE); CALIK, Emre, 83022 Rosenheim (DE)
(74) Representative: Maiwald GmbH

(57) **Abstract**

Electrical connection device (10) for a switchgear module, in particular of a low voltage switchgear, comprising:
a frame (11) configured to attach the electrical connection device (10) to a module body; a front plate (12) comprising at least one connection interface (13) configured to be connected to a corresponding interface, wherein the front plate (12) is movably arranged in the frame (11) between a first and a second position;
an electrical actuator mechanism (14) configured to move the front plate (12) in the first position or second position.

## Description

### FIELD OF THE INVENTION

The present invention relates to an electrical connection device, a control unit a switchgear module and a use of a DC motor in such an electrical connection device.

### BACKGROUND OF THE INVENTION

Switchgears are used in electric power systems and are well known in the state of the art. Switchgears are commonly found throughout electric utility transmission and distribution systems as well as in medium to large sized commercial or industrial facilities. Switchgears comprise several electrical switches, fuses or circuit breakers, which are used to control, protect and isolate electrical equipment. The circuit protection devices or switchgear modules are mounted in metal structures. A collection of one or more of these structures is called a switchgear line-up or assembly. Some of these modules may be removable. It is sometime necessary for commissioning, servicing, and/or troubleshooting to disconnect the main plugs/connections of a module and connecting a control wiring of the module. This state is the so called test position. The control wiring plugs are usually located in a potential hazardous area and out of reach for a person to operate. Furthermore, the control wiring plugs are hard to move manually, because a significant force is required. Therefore, auxiliary means are usually necessary that allow connecting and disconnecting the control wiring plugs without opening the enclosure and reaching into a potentially hazardous zone.

It has now become apparent, due to the wide range of applications, that there is a need to provide further means to improve switchgears.

In view of the above, it is an object of the present invention to provide further means to improve the handling of switch gear modules. It is in particular an object of the present invention to provide better means to easily connect and disconnect the control wiring of a switchgear module.

These and other objects, which become apparent upon reading the following description, are solved by the subject matter of the independent claims. The dependent claims refer to preferred embodiments of the invention.

### SUMMARY OF THE INVENTION

According to a first aspect of the present disclosure, an electrical connection device for a switchgear module, in particular of a low voltage switchgear, is provided, comprising: a frame configured to attach the electrical connection device to a module body; a front plate comprising at least one connection interface configured to be connected to a corresponding interface, wherein the front plate is movably arranged in the frame between a first position and a second position; and an electrical actuator mechanism configured to move the front plate in the first position or the second position.

The electrical connection device is preferably configured to be used with a switchgear module, in particular with a low voltage switchgear module.

The term frame is to be understood broadly in the present disclosure. A frame can be any structure, which can be used to attach/mount the electrical connection device to a module body. The frame also may hold other parts of the electrical connection device.

The front plate is the part of the electrical connection device, which comprises or holds the connection interface. The front plate is arranged in the frame such that it may be moved along one linear direction of freedom or along one axis. The front plate may be moved between a first position and a second position. Both positions may be respective end positions of the front plate. The first and second position may be defined positions in respect to the distance from the frame.

The movement of the front plate is driven or powered by the electrical actuator mechanism. The term electrical actuator mechanism is to be understood broadly in the present disclosure. The term may comprise all electrical actuator means that are suited to move/drive the front plate.

The operation of the electrical connection device may be a rare event. It may occur only several times over the entire lifetime of the module to which the electrical connection device is connected. The electrical connection device according to the present invention does not age over time and does not require any additional service when not in use. Therefore, the electrical connection device is reliable and functional when it needs to be activated.

The provided electrical connection device is further capable to overcome considerable forces (e.g. 150 N) into two directions (pulling and pushing).

Also, modules in low voltage switchgears are highly customizable. The provided electrical connection device is advantageous since it is easy to adjust to different module configurations and sizes. Furthermore, the provided electrical connection device is very cost-effective and provides a sufficient force to move the front plate with the connection interface.

In a preferred embodiment of the present disclosure, the electrical actuator may comprise or may be a DC motor. DC motors are well known state of the art and provide high velocities with good controllability.

In an embodiment, at least one gear rack is connected to the front plate; wherein the electrical actuator mechanism or the DC motor are connected to the gear rack such that the gear rack and the front plate can be moved in a linear manner. The gear rack allows to transform a rotational movement into a linear movement. It is possible, that more than one gear rack are connected to the frame. The gear rack is preferably guided in the frame at least in sections. Alternatively, other ways to transform a rotational motion into a linear motion may be used. For example, a spindle drive may be used in combination with an electrical actuator mechanism, e.g. a DC motor.

In an embodiment, the electrical actuator mechanism and the at least one gear rack are connected by a gear assembly. The gear assembly may comprise multiple cog/gear wheels. The gear assembly may provide a transmission ratio for a better torque control.

In an embodiment, the gear assembly is arranged on a shaft, wherein the shaft is mounted in the frame. The shaft may be driven directly or indirectly by the electrical actuator mechanism. It may be possible to arrange multiple gears on the shaft. In this way, a drive mechanism for multiple gear racks may be provided. For example, there may be at least three cog wheels that are mounted on the shaft. One cog wheel may be connected to the electrical actuator mechanism and may be driven by said electrical actuator mechanism, wherein the other two cog wheels may be connected to separate gear racks.

In an embodiment, in the first position, the front plate is contact with the frame and in the second position, the front plate is spaced from the frame. This allows defined end and start positions of the movable front plate.

In an embodiment, the front plate comprises at least on guide element, configured to interact with a corresponding guide retainer. The guide element allows a precise movement of the front plate. That means, the connection interface of the front plate may be more easily connected to its corresponding interface. That means the connection procedure is more reliable and accurate.

In an embodiment, the guide element comprises a protrusion extending into the direction of movement of the front plate during operation. The corresponding guide retainer may have a geometry that corresponds with the shape of the protrusion of the guide element at least in sections. Other shapes may be provided.

In an embodiment, the frame comprises a compartment, wherein the compartment is configured to removably house the electrical actuator mechanism. For example, the compartment is configured to house a DC motor. In this way, the electrical actuator mechanism may be powered by a battery pack. For this purpose, the battery pack may be included in the electrical actuator mechanism. This allows to power the electrical actuator mechanism independently from the switchgear module.

In an embodiment, the compartment is configured to receive a locking element, wherein, in an assembled state, the locking element interconnects with the gear rack such that the gear rack is fixed. The locking element restricts any movement of the front plate. The locking element is preferably arranged in the compartment such that the locking element may not rotate while being connected to the gear rack. In this way, an unwanted movement of the front plate may be prevented. The locking may be achieved by a form fit of the locking element and the compartment and/or the gear rack.

In an embodiment, at least one limit switch is arranged at the electrical connection device, wherein the limit switch is configured to be activated by a movement of the front plate. A limit switch may be configured to automatically stop/deactivate the electrical actuator mechanism, when the front plate has been moved a certain distance and/or to a certain position.

In an embodiment, the electrical connection device comprises a first limit switch, for limiting the movement of the front plate away from the frame and a second limit switch for limiting the movement of the front plate to the frame. In this way, the allowed moving distance of the front plate may be defined. This may prevent damages of the front plate or at the connection interface on the front plate. The first limit switch may be configured to define the second position of the frame and the second limit switch may be configured to define the first position of the frame or vice versa.

In an embodiment, the electrical connection device is configured to be arranged at a back side of a switchgear module. This placement may provide an easy connection of the control wiring of the switchgear module.

A further aspect of the invention is a control unit for an electrical connection device according to any of the embodiments above, wherein the control unit is configured to be connectable to the electrical connection device. In other words, the control unit may be a portable and/or a handheld unit/device, which may be connectable to the electrical control device. The portable control unit ensures that the electrical connection device may only be activated when required.

A further aspect of the present disclosure relates to a switchgear module comprising an electrical connection device according to any one of the preceding embodiments.

A further aspect of the present disclosure is a use of a DC motor in an electrical connection device according to any of the above embodiments.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. The drawings display:
- **Figure 1**: a perspective view of a schematic drawing of an electrical connection device;
- **Figure 2**: a perspective view of a schematic drawing of an electrical connection device;
- **Figure 3**: a perspective view of a schematic drawing of an electrical connection device;
- **Figure 4**: a perspective view of a schematic drawing of an electrical connection device;
- **Figure 5**: a cut of the electrical connection device according to Fig. 4;
- **Figure 6**: a perspective view of a schematic drawing of a further electrical connection device in a mounted state;
- **Figure 7**: a perspective view of the electrical connection device according to Fig. 6 in a first position;
- **Figure 8**: a perspective view of the electrical connection device according to Fig. 6 in a second position;
- **Figure 9**: a perspective view of the electrical connection device according to Fig. 6 with an installed electrical actuator mechanism;
- **Figure 10**: a perspective view of the electrical connection device according to Fig. 6 with an electrical actuator mechanism before installation;
- **Figure 11**: a perspective view of the electrical connection device according to Fig. 6 with an installed locking element;
- **Figure 12**: a perspective view of the electrical connection device according to Fig. 6 with a locking element before installation;
- **Figure 13**: a perspective back view of the electrical connection device according to Fig. 6;
- **Figure 14**: a perspective view of a frame of an electrical connection device according to Fig. 6;
- **Figure 15**: a top view of the electrical connection device according to Fig. 6;
- **Figure 16**: a first cut of the electrical connection device according to Fig. 6;
- **Figure 17**: a second cut of the electrical connection device according to Fig. 6;
- **Figure 18**: a perspective view of an electrical connection device in an installed state;
- **Figure 19**: a detailed view of the electrical connection device according to Fig. 18; and
- **Figure 20**: a schematic drawing of a control unit for the electrical connection device.

### DESCRIPTION OF THE EMBODIMENTS

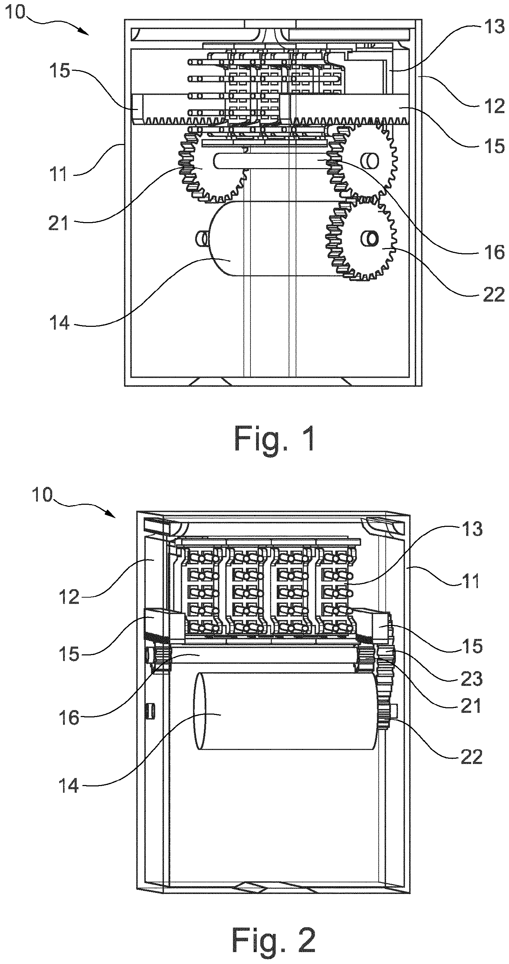

Fig. 1 shows an electrical connection device 10. The electrical connection device 10 comprises a frame 11 and a front plate 12.

The front plate 12 has a rectangular shape. Other shapes are possible. The front plate 12 may have longitudinal and transverse sides. The front plate 12 may be moved into a first position and into a second position. The front plate 12 may be moved while arranged in the frame 11.

The front plate 12 comprises a rectangular recess. Inside the recess, a connection interface 13 is arranged. The recess with the connection interface 13 may be arranged in a center or in a center region of the front plate 12. Alternatively, the recess and the connection interface 13 may be arranged near a side of the front plate 12. The connection interface 13 protrudes from the front plate 12. More precisely, the connection interface 13 protrudes away from the front plate 12.

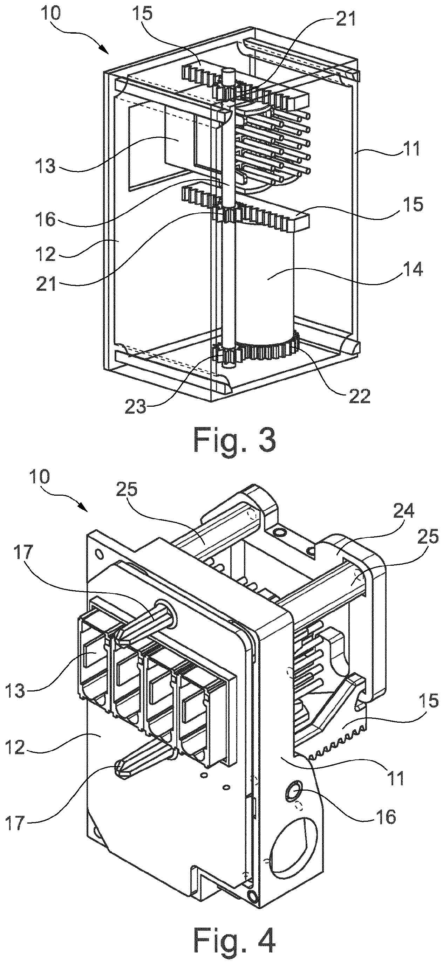

A collar (shown in Fig. 4) is arranged around the rectangular recess and subsequently around the connection interface 13. The collar protrudes away from the front side of the front plate 12. The front side is the side of the front plate 12, which faces toward a corresponding interface when installed.

During operation, the connection interface 13 moves with the front plate 12 into the first position and the second position. The connection interface 13 may be connected with a corresponding interface in the second position of the front plate 12 and may be disconnected from the corresponding interface in the first position of the front plate 12. The front plate 12 may be distanced to the frame 11 in the second position. In the first position, the front plate 12 may be close to the frame or in contact with the frame 11. More precisely, the distance between the front plate 12 and the frame 11 is smaller in the first position than in the second position.

The front plate 12 comprises two gear racks 15. The gear racks 15 protrude away from the backside of the front plate 12. The backside of the front plate 12 is the side, which does not face the corresponding interface of the connection interface 13 during operation. The gear racks 15 are arranged on opposing longitudinal sides of the front plate 12. Although other arrangements are possible. The gear teeth of the gear rack 15 protrude downwards. In other words, the gear teeth of the gear racks 15 protrude in a direction orthogonal to the direction of movement of the front plate 12. The two gear racks 15 are each connected to a gear wheel 21. The gear wheels 21 are mounted on a shaft 16. The gears wheels 21 and the shaft 16 are part of a gear assembly.

The shaft 16 protrudes in a transverse direction of the front plate 12. This means the shaft 16 protrudes between the opposite longitudinal sides of the frontplate12. In other words, the shaft 16 extends in a direction orthogonal to the gear racks 15. The shaft 16 is rotatable mounted in the frame 11. The shaft 16 is arranged offset between the two gear racks 15.

The gear wheels 21 are connected to a drive wheel 22. The drive wheel 22 is directly connected to an electrical actuator mechanism 14. The electrical actuator mechanism 14 extends in a transverse direction of the front plate 12. In this embodiment, the electrical actuator mechanism 14 may be a DC motor. The different gear wheel elements all have the same diameter in this embodiment.

The assembly of the electrical actuator mechanism 14, the drive wheel 22, the gear wheels 21 and the gear racks 15 allows to transform a rotational movement of the electrical actuator mechanism 14 into a linear movement. By this, the front plate 12 may be moved between the first position and the second position.

Fig. 2 shows a similar embodiment as Fig. 1. In contrast to the above embodiment, the shaft 16 in Fig. 2 comprises a transmission gear wheel 23. The transmission gear wheel 23 has a different diameter as the gear wheels 21 and the drive wheel 22 and therefore provides a transmission ratio.

Fig. 3 shows an embodiment in which the gear racks 15 are arranged offset in a longitudinal direction of the front plate 12. The gear teeth of the gear racks 15 protrude therefore in a transverse direction.

Correspondingly, the shaft 16 in Fig. 3 extends in longitudinal direction offset to the gear racks 15. The electrical actuator mechanism 14 extends parallel to the shaft 16. In other words, the shaft 16 and the electrical actuator mechanism 14 are rotated 90° in contrast to the previous embodiments.

The shaft 16 comprises two gear wheels 21 and a transmission wheel 23. The two gear wheels 21 are arranged to interact with the gear racks 15 and the transmission wheel 23 is arranged to interact with the drive wheel 22 of the electrical actuator mechanism 14. The two gear wheels 21 and the transmission wheel 23 all have the same diameter. The drive wheel 22 has a larger diameter than the gear wheels 21 and the transmission wheel 23. Furthermore, the gear wheels 21 and the drive wheel 22 in this embodiment are smaller than their counterparts shown in Fig. 1 and in Fig. 2.

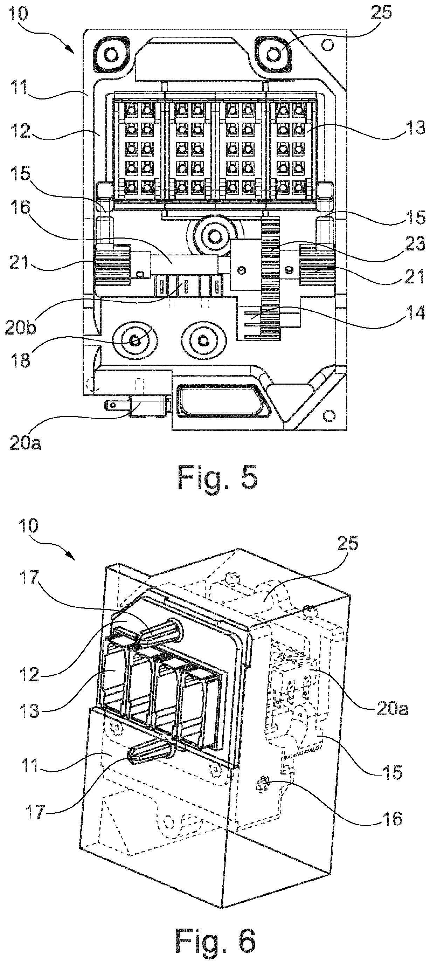

Fig. 4 and Fig. 5 show a further embodiment of the electrical connection device 10. Fig. 4 is a front view and Fig. 5 is a cut of the electrical connection device 10.

As seen in Fig. 4, the frame 11 and the front plate 12 both have similar shapes. The frame 11 and the front plate 12 both have an essentially rectangular shape, wherein a step with an edge is arranged at a transverse side. The step is in the same plane as the front plate 12.

The front plate 12 has three opaque edges. In the regions of said opaque edges, sections of the corners of the frame 11 are visible. Through-holes are arranged in the visible sections of the corners. This allows an easy installation of the electrical connection device 10, for example by screws.

The front plate comprises two guide elements 17. The guide elements 17 are arranged opposite to each other, wherein the connection interface 13 is arranged between the two guide elements 17. The two guide elements 17 are identical to each other. One end of the guide element 17 is integrally connected with the front plate 12, wherein the other end is free. The cross section of the guide elements 17 are cross shaped. The guide elements 17 narrows towards the free end. The guide elements 17 are arranged at the front side of the front plate 12. The front side is the side, which faces a corresponding interface, when installed. When in operation, the guide elements 17 interact with corresponding receptacles. This allows a more precise movement of the front plate 12.

In Fig. 5, the shaft 16, the gearwheels 21, the drive wheel 22 and the transmission wheel 23 are shown.

The gearwheels 21 are both arranged on the axial ends of the shaft 16. Each gear wheel 21 interacts with a respective gear rack 15.

The transmission wheel 23 is arranged on the shaft 16 between the two gear wheels 21. The transmission wheel 23 interacts with the drive wheel 22 connected to the electrical actuator mechanism 14, e.g. a DC motor. The transmission wheel 23 has a larger diameter than the gear wheels 21 and the drive wheel 22.

The gear racks 15 are connected to the backside of the front plate 12. The gear racks 15 protrude away from the backside of the front plate 12. The backside of the front plate 12 is the side, which does not face the corresponding interface of the connection interface 13 during operation. The gear racks 15 are arranged on opposing longitudinal sides of the front plate 12. The gear teeth of the gear rack 15 protrude downwards. In other words, the gear teeth of the gear racks 15 protrude in a direction orthogonal to the direction of movement of the front plate 12.

The gear racks 15 may be connected integrally with the front plate 12. The gear racks 15 have free ends. Each free end is connected to a structure 24. In this embodiment, the gear racks 15 are both connected to the structure 24 by a form fit. Other means of connection may be possible. In operation, the structure 24 moves with the gear racks 15 and the front plate 12. The structure 24 stabilizes the front plate 12. The structure 24 also holds cables, which are connected to the connection interface 13.

The front plate 12 also has two further guide bars 25 on its backside. These guide bars 25 serve as guides through the frame 11. The guide bars 25 may be formed integrally with the front plate 12. The guide bars 25 are connected to the structure 24. In the shown embodiment, the guide bars 25 have an elliptical cross section. Other geometries, for example cylindrical or rectangular, may be possible.

In Fig. 5, it can be seen, that the electrical actuator mechanism, e.g. DC motor, is arranged in a compartment 18. The compartment 18 is part of the frame 11. In other words the compartment 18 is integrally formed with the frame 11. Other embodiments are possible.

The electrical connection device 10 comprise two limit switches 20. A first limit switch 20a and a second limit switch 20b. The limit switches 20 are activated when in contact with the structure 24 or with the backside of the front plate 12. By doing so, the limit switches 20 may limit the movement of the front plate 12.

Figs. 6 to 17 show a further embodiment according to the present disclosure. The embodiment of the electrical connection device 10 shown in the Figs. 6 to 17 and the embodiments according to the previous Figs. are similar to each other.

In Fig. 6 an electrical connection device 10 is shown which is installed in a housing. The frame 11 and the front plate 12 in Fig. 6 are essentially rectangular. One corner of the frame 11 and the front plate 12 each has an opaque edge. The housing has a corresponding opaque surface on which the opaque edge is placed.

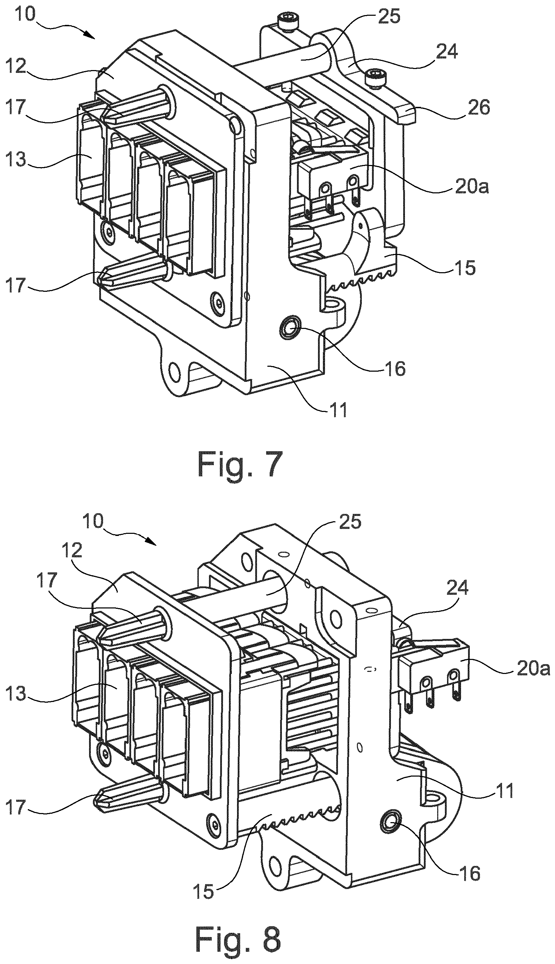

Fig. 7 shows the electrical connection device 10 according to the embodiment of Fig. 6 in the first position and Fig. 8 in the second position.

In the first position, the front plate 12 is in contact with the frame 11. Alternatively, the front plate 12 may be very close to the frame 11, but leaving a small gap. In the second position, the front plate 12 is spaced from the frame 11. In an assembled or installed state, the connection interface 13 is connected to a corresponding connection interface in the second position and in the first position, the connection interface 13 is disconnected from a corresponding connection interface.

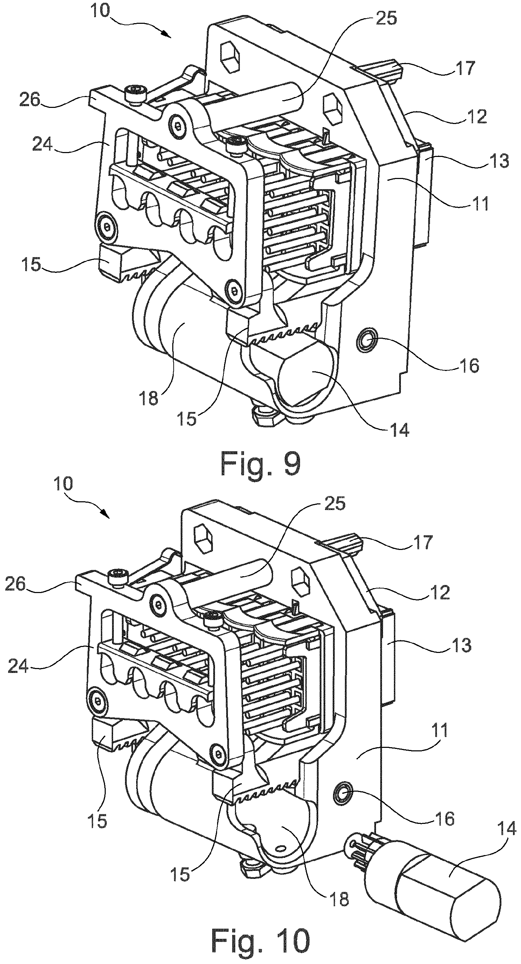

Fig. 9 and Fig. 10 show how the electrical actuator mechanism 14, e.g. DC motor, is arranged in the compartment 18. The electrical actuator mechanism 14 is removably arranged in the compartment 18.

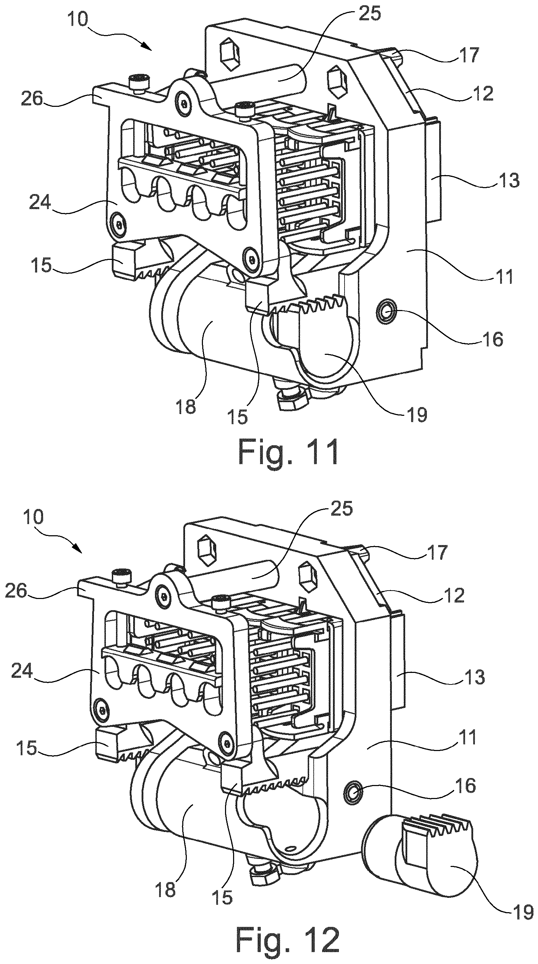

In Fig. 11 and Fig. 12, a locking element 19 is arranged inside the compartment, instead of the electrical actuator mechanism 14. The locking element 19 has a section with gear teeth. When installed in the compartment 18, the section with gear teeth interacts with the gear racks 15. The locking element 19 cannot rotate due to its geometry inside the compartment 18. Therefore, the locking element 19 blocks any movement of the gear racks 15 and in this way, any movement of the front plate 12. More precisely, the locking element 19 and the gear rack 15 are connected by a form fit such that the gear rack 15 is fixed.

As seen in Figs. 9 to 12, the electrical actuator mechanism 14 and the locking element 19 may be interchangeable.

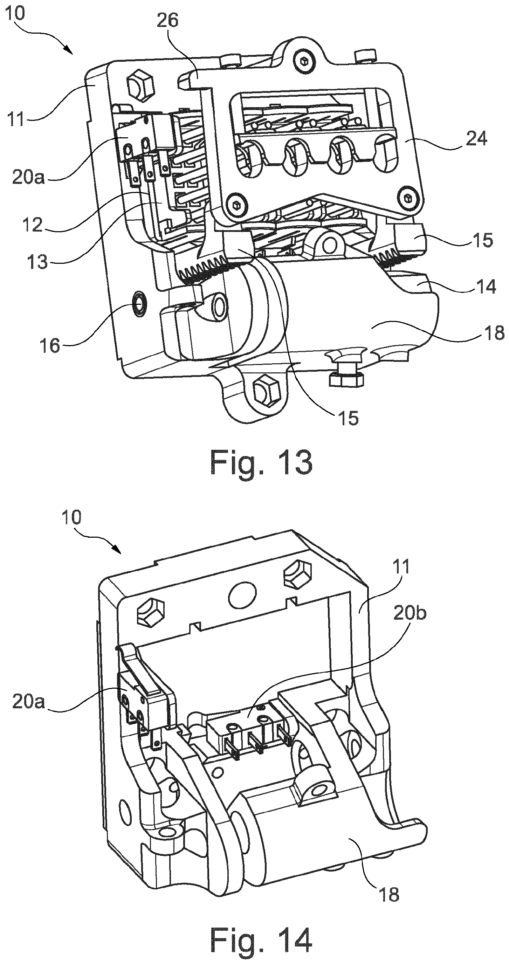

A view from the back is shown in Fig. 13. It can be seen, that the gear racks 15 are connected to the structure 24 by screws. Other means may be possible in a different embodiment.

The structure 24 has a nose 26. The nose 26 is positioned on a side of the structure 24. The nose protrudes in a direction orthogonal to the direction of movement of the structure 24. The nose 26 interacts with the first limit switch 20a. The limit switches 20a, 20b both comprise a contact tongue. The contact tongue is elastic and can be bent to close a circuit.

The second limit switch 20b is arranged such that the front plate 12 bends its contact tongue, when the front plate 12 is in the first position. The first limit switch 20a is arranged such that the nose 26 of the structure 24 bends its contact tongue when the front plate 12 moved into the second position.

A preferred arrangement of the limit switches 20 is shown in Fig. 14. Both limit switches 20 are arranged at the frame 11. The first limit switch 20a is arranged at the frame 11 such that its contact tongue protrudes towards the frame 11. The second limit switch 20b is arranged at the frame 11 such that its contact tongue protrudes in a direction orthogonal to the direction of the contact tongue of the first limit switch 20a.

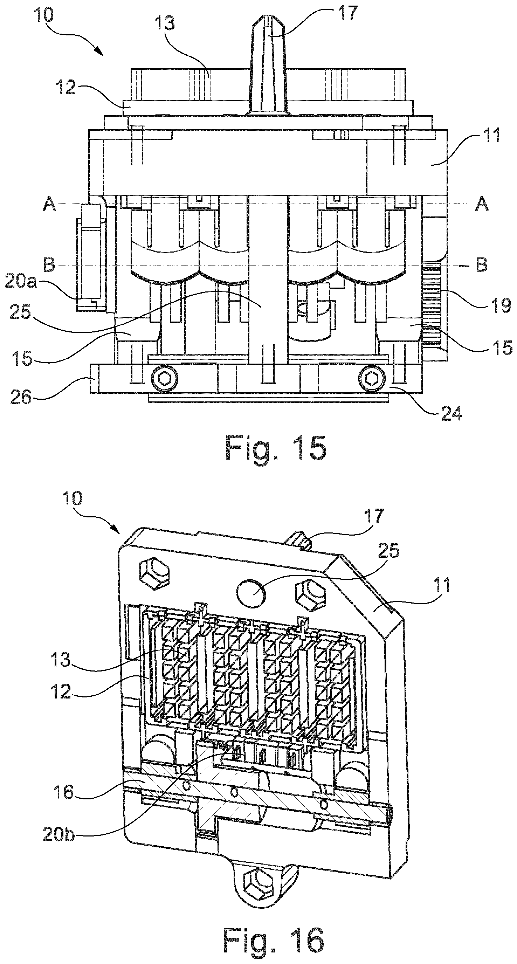

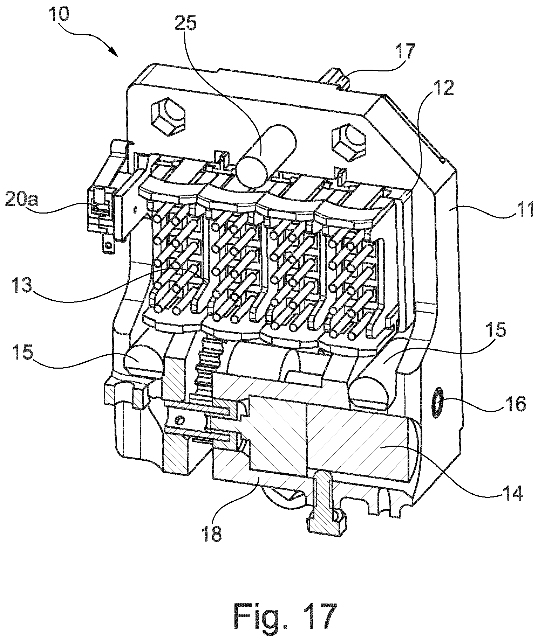

Fig. 15 shows a top view of the electrical connection device 10. Two cuts A-A and B-B are shown in Fig. 15. Fig. 16 is a detailed view of along A-A and Fig. 17 is a detailed view along cut B-B. The embodiments shown in Figs. 16 and 17 correspond to the embodiments shown in Fig. 6. Therefore, it may be referred to the embodiments above.

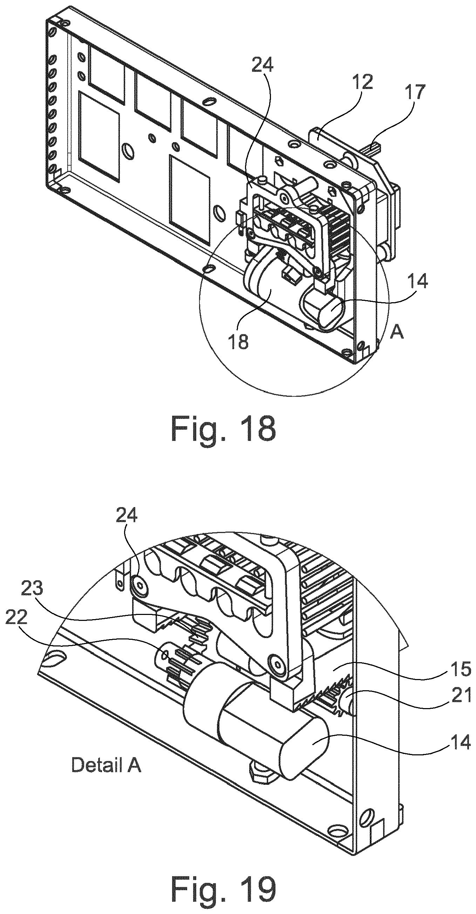

Fig. 18 is an illustration of the electrical connection device 10 installed in a rear wall of a switchgear module. The frame 11 is connected to the rear wall. As seen in Fig. 18, the front plate 12 faces away from the rear wall. In an assembled state, the front plate 12 faces to the outside of the switchgear module. In Fig. 18, the front plate 12 is in the second position.

Fig. 19 is a detailed view of the highlighted area A in Fig. 18. In Fig. 18, part of the frame 11 has been removed for a better view of the electrical actuator mechanism 14. The electrical actuator mechanism 14 may be preferably a DC motor.

DC motors are widely available at relatively low cost. Even at small size, they can achieve high torque and allow to create a rotary motion that is simple to control. The rotary motion can then be translated into a linear motion to suit the requirements of the problem on hand. Given the space constraints inside the low voltage switchgear modules, placing a DC-Motor near to the module rear wall is a suitable way to move the control wiring plugs remotely.

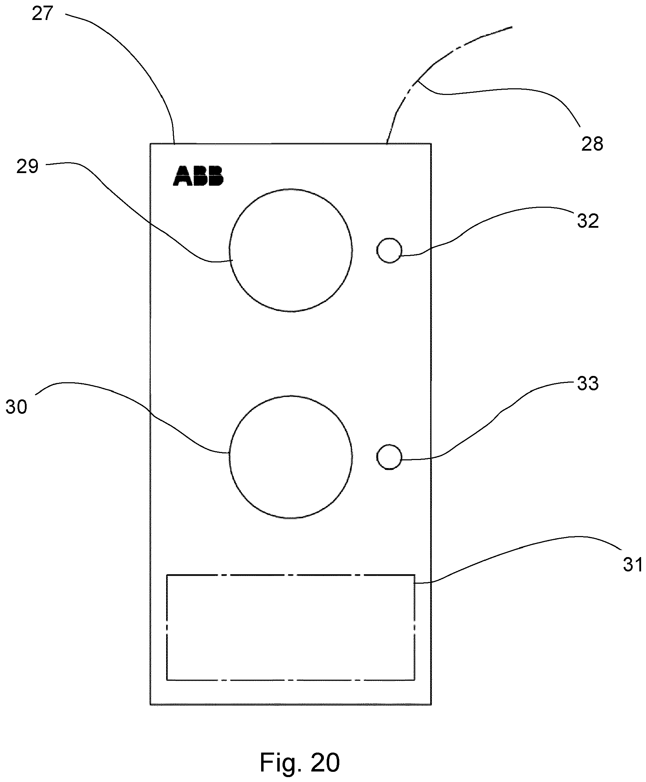

Fig. 20 shows a control unit 27 for an electrical connection device 10. The control unit 27 comprises a cable 28. The control unit 27 may be connectable to the electrical connection device 10 by cable 28. For example, there may be a socket for a plug of the cable 28 in a switch gear module, e.g. in the housing of the switch gear module. The control unit 27 further comprises a first button 29 and a second button 30. The buttons 29, 30 activate the electrical connection device 10, in particular the electrical actuator mechanism 14, and allow to extend or retract the front plate 12 of the electrical connection device 10. The control unit 27 may be powered by a battery 31 or multiple batteries. The battery 31 may be located inside the control unit 27 and serve as an energy source for the electrical actuator mechanism 14. The control unit 27 has a first light 32 and a second light 33 to indicate the status of the electrical connection device 10. The first and second lights 32, 33 may be LED lights. For example, once the front plate 12 has reached its extended or retracted position, the corresponding LED 32, 33 on the control unit 27 lights up and the voltage on the link gets cut.

The electrical actuator mechanism 14, e.g. the DC motor, may be energized by the battery 31 of the hand-held control unit 27 that is connected to a module front by an operator. Once energized, the electrical actuator mechanism 14 winds out the frame 12 or control plug assembly. The electrical actuator mechanism 14 may not be energized if the module is not in its disconnected position. The electrical actuator mechanism 14 drives a set of cogwheels to adjust speed and force of the actuation. The rotary motion of the cogwheels is turned into a linear motion of the control plug assembly by the gear rack 15 that is part of the control plug assembly.

Any disclosure and embodiments described herein relate to the electrical connection device, the switchgear module and the usage of a DC motor lined out above or below and vice versa. The benefits provided by any of the embodiments and examples equally apply to all other embodiments and examples and vice versa.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCES

- 10: electrical connection device
- 11: frame
- 12: front plate
- 13: connection interface
- 14: electrical actuator mechanism
- 15: gear rack
- 16: shaft
- 17: guide element
- 18: compartment
- 19: locking element
- 20: limit switch
- 20a: first limit switch
- 20b: second limit switch
- 21: gear wheels
- 22: drive wheel
- 23: transmission wheel
- 24: structure
- 25: guide bars
- 26: nose
- 27: control unit
- 28: cable
- 29: first button
- 30: second button
- 31: battery
- 32: first light
- 33: second light

## Claims

1. Electrical connection device (10) for a switchgear module, in particular of a low voltage switchgear, comprising:
a frame (11) configured to attach the electrical connection device (10) to a module body; a front plate (12) comprising at least one connection interface (13) configured to be connected to a corresponding interface, wherein the front plate (12) is movably arranged in the frame (11) between a first position and a second position; and
an electrical actuator mechanism (14) configured to move the front plate (12) in the first position or the second position.

2. Electrical connection device according to claim 1,
**characterised in that**
the electrical actuator mechanism (14) comprises a DC motor.

3. Electrical connection device according to claim 1 or 2,
**characterised in that**
at least one gear rack (15) is connected to the front plate (12); wherein
the electrical actuator mechanism (14) or the DC motor and the gear rack (15) are connected such that the gear rack (15) and the front plate (12) can be moved in a linear manner.

4. Electrical connection device according to any one of the preceding claims, **characterised in that**
the electrical actuator mechanism (14) and the at least one gear rack (15) are connected by a gear assembly.

5. Electrical connection device according to claim 4,
**characterised in that**
the gear assembly is arranged on a shaft (16), wherein the shaft (16) is mounted in the frame (11).

6. Electrical connection device according to any of the preceding claims,
**characterised in that**
in the first position, the front plate (12) is contact with the frame (11) and in the second position, the front plate (12) is spaced from the frame (11).

7. Electrical connection device according to any one of the preceding claims,
**characterised in that**
the front plate (12) comprises at least on guide element (17), configured to interact with a corresponding guide retainer.

8. Electrical connection device according to claim 7,
**characterised in that**
the guide element (17) comprises a protrusion extending into the direction of movement of the front plate (12) during operation.

9. Electrical connection device according to any of the preceding claims,
**characterised in that**
the frame (11) comprises a compartment (18), wherein the compartment (18) is configured to removably house the electrical actuator mechanism (14).

10. Electrical connection device according to claim 9,
**characterised in that**
the compartment (18) is configured to receive a locking element (19), wherein, in an assembled state, the locking element (19) interconnects with the gear rack (15) such that the gear rack (15) is fixed.

11. Electrical connection device according to any of the preceding claims,
**characterised in that**
at least one limit switch (20) is arranged at the electrical connection device (10), wherein the limit switch (20) is configured to be activated by a movement/contact of the front plate (12).

12. Electrical connection device according to claim 11,
**characterised in that**
the electrical connection device further comprising a first limit switch (20a), for limiting the movement of the front plate (12) away from the frame (11) and a second limit switch (20b) for limiting the movement of the front plate (12) to the frame (11).

13. Control unit for an electrical connection device (10) according to any of the preceding claims, wherein the control unit (27) is configured to be connectable to the electrical connection device (10).

14. Switchgear module comprising an electrical connection device (10) according to any of the claims 1 to 12.

15. Use of a DC motor in an electrical connection device (10) according to any of the claims 1 to 12.
